# EUROPEAN PATENT APPLICATION

(11) **EP 2 934 060 A1**
(43) Date of publication of application: **21.10.2015**
(21) Application number: 14191590.0
(22) Date of filing: 04.11.2014
(51) Int. Cl.: H04W 84/20, G06F 1/16

(54) **Modular network apparatus and system having multiple modular network apparatuses**

(30) Priority: 18.04.2014 US 201461981221 P
(71) Applicant: Arcadyan Technology Corp., Hsinchu 300 (TW)
(72) Inventor: Lin, Yen-Ju, 300 Hsinchu (TW); Wang, Jenn-Ian, 300 Hsinchu (TW); Huang, Shih-Hsin, 300 Hsinchu (TW)
(74) Representative: Viering, Jentschura & Partner Patent- und Rechtsanwälte

(57) **Abstract**

Disclosure is related to a modular network apparatus, and a system having multiple modular network apparatuses. One of the modular network apparatuses can be set as a master device (41). The master device (41) includes a micro-controller (411), a network module (412) for rendering network service, and an expansion interface unit (415). The master device (41) provides at least one function module. The master device (41) is connected to the other modular network apparatus which is set as a slave device (42) via an expansion interface. Therefore the system can provide further function by the slave device (42). According to one embodiment, the master device (41) and at least one slave device (42) are connected via the expansion interface. Through this expansion interface such as a communication port, the system may deliver power signals, signals, or operating status. The master device (41) and the slave device (42) may also share the power supply, management scheme, and the interface.

## Description

### BACKGROUND OF THE INVENTION

### 1. Field of the Invention

The present invention generally relates to a modular network apparatus and a system having multiple modular network apparatuses, in particular, to an independent network device having an expansion interface, by which to form the system including the multiple modular network apparatuses.

### 2. Description of Related Art

The conventional network device such as router, network switch, or the network sharing machine merely provides the proprietary function as it is manufactured to have the related functional circuit, no matter within a wired or wireless LAN, or over a mobile communication network.

The conventional network device may have capability to expand its function via its communication port. That means the network device may incorporate further function via the port in addition to its own function. For example, besides the network sharing machine is as a bridge to interface with wired or wireless network, the machine may also serve mobile communication network or cloud storage.

In an exemplary example, the network sharing machine is disposed with a communication port, e.g. USB, which allows the machine to bridge mobile communication network through a mobile device. Further, the network sharing machine may allow other devices which are connected with the sharing machine to access an external hard disk when it is plugged with the external hard disk.

Therefore, the conventional network device may only be expanded to other function via its communication port when it may still render the original function.

In general, the every network device is designed for one purpose and with limited expansion capability. When the user needs to have one further function, the only way is to buy one more fully-functional device.

### SUMMARY OF THE INVENTION

The disclosure of the present application is directed to an expandable modular network apparatus, and a system having a plurality of modular network apparatuses. Every modular network apparatus may be functioned independently. The modular network apparatus may be connected with another modular network apparatus for providing further function via an expansion interface. This more modular network apparatus may also be a standalone apparatus. The assembly forms an expandable multifunctional network system.

In an exemplary example, the primary circuit modules of the modular network apparatus are such as a micro-controller for processing the internal signals among the circuit components, a network module for serving network connection, at least one function module, a memory module and an expansion interface unit for interfacing another network apparatus with one function module. The memory module is used to store the instruction for performing at least one function, and instruction for detecting another network apparatus with one further function module via the expansion interface.

In an embodiment of the system, one modular network apparatus is defined as a master device, which is connected with another modular network apparatus as a slave device via the expansion interface. The master device is disposed with a power management module bridged with a power source. The electric power may be transferred to the slave device via this expansion interface. The signals may also be transmitted to the slave device by the same way.

The system is exemplarily consisting essentially of a plurality of modular network apparatuses. A master device and at least one slave device are the primary elements of the system. The master device is the modular network apparatus including the micro-controller, the network module, the at least one function module, the expansion interface unit, and the memory module. The slave device is the network apparatus with one more function module. The primary circuits of the slave device has a micro-controller, at least one function module, an expansion interface unit, and a connection means for connecting the master device and the at least one slave device. The system allows the multiple modular network apparatuses to provide the functions made by the master device and the at least one slave device.

### BRIEF DESCRIPTION OF THE DRAWINGS

Fig. 1 shows a schematic diagram depicting a system having multiple modular network apparatuses in one embodiment of the present invention;
Fig. 2 shows a schematic diagram depicting the system according to one further embodiment of the present invention;
Fig. 3 shows a schematic diagram depicting the system according one embodiment of the present invention;
Fig. 4 shows a diagram describing circuit modules in the system with multiple modular network apparatuses in one embodiment of the present invention;
Fig. 5 schematically describes a master device within the system with multiple modular network apparatuses in one embodiment of the present invention;
Fig. 6 schematically describes the system according to one embodiment of the present invention;
Fig. 7 schematically describes the system according to another embodiment of the present invention;
Fig. 8 schematically describes the system according to one further embodiment of the present invention;
Fig. 9 schematically describes the system according to one further embodiment of the present invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

Disclosure related to the present invention is to a modular network apparatus, and a system having modular network apparatuses. The modular network apparatus is such as an expandable standalone network apparatus. Every modular network apparatus in the system includes an expansion interface which is used to connect with other modular network apparatus. The other connected modular network apparatus provides extensible function for establishing a multifunctional and expandable network system.

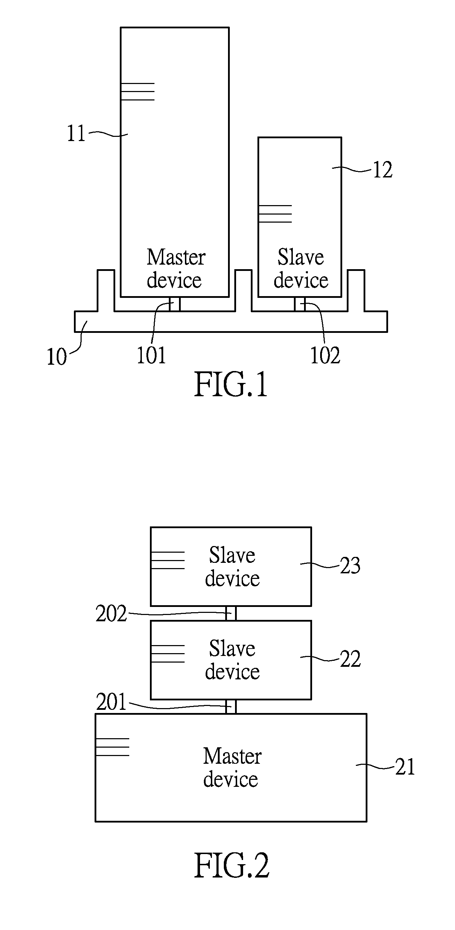

The system having the multiple modular network apparatuses may be referred to the embodiment shown as the schematic diagram in Fig. 1.

According to the structural embodiment of the present invention, the system is configured to have different types of the modular network apparatuses such as a master device 11 and one or more slave devices 12. Preferably, the master device 11 or the slave device 12 is a standalone device. However, some other types of the slave device 12 may not be excluded. In an exemplary example, the operation of slave device 12 may rely on the master device 11, for example the master device 11 supplies power to the slave device 12; and a signal transmission and management interface is provided there-between.

The separate master device 11 and the slave device 12 are assembled in a connection device 10 through a structural mechanism. A first connection means 101 for the master device 11 is provided to connect to the connection device 10. The slave device 12 is connected with the connection device 10 by a second connection means 102. The connection device 10 provides a mechanism to electrically interconnect the two devices (11, 12). The connection made by the connection device 10 may be a wired or wireless connection.

In an exemplary embodiment, the master device 11 is such as device providing some elementary functions. The master device 11 may operate as a network sharing machine which includes a network module rendering a connection to an external network, e.g. Internet, a circuit module rendering wireless local network (WiFi™), and a circuit performing packet routing. The network sharing machine, namely the master device 11, allows the user devices within local area network to connect to external network. The master device 11 has a circuit for electric power management.

In general, the conventional network device lacks of capability of expansion, but its original function. The scheme in the present invention allows the network device to be expanded to further functions via an expansion interface. The expansion interface for the network device is rather than the conventional way to expand the device's function, such as using USB interface to connect to external hard disk, or device over a mobile network. According to the present invention, the expansion interface for the modular network apparatus is correspondingly connected to the expansion interface for another modular network apparatus. The other modular network apparatus is such as a slave device rendering further function module.

For example, a master device 11 renders no mobile communication function such as 3G or LTE, and therefore requires connecting to one modular network apparatus which is with a circuit of mobile communication protocol. This assembly provides a user device to firstly connect to a master device 12 via a wireless local area network, and then bridge a mobile communication network through a slave device 12 which is with the circuit of mobile communication protocol. In particular, the signals over the wireless local area network are bridged to the mobile communication network through the connection device 10. The connection device 10 is also in charge of transmitting electric power from the master device 11 to the slave device 12.

In one further embodiment, the slave device 12 is such as a set top box having a digital audio-video conversion circuit. When the user device connects to the master device 11 via a wired or wireless connection, the user device can retrieve the digital audio-video content from the connected slave device 12.

The other types of the function modules configured to the slave device 12 are such as, but not limited to, network attached storage (NAS), wireless digital television system, cable television system, wireless video bridge, and audio/video communication system. One aspect of the present invention is to provide elementary network service made by the master device 11 or the slave device 12, and expanded to other functions such as other network protocols or audio-video services as requires through the further slave modular network apparatus.

Reference is made to Fig. 2 depicting the system combining the multiple modular network apparatuses in one embodiment of the present invention.

The expansion interface made for the apparatus allows the system to be expanded to more functions. The expansion interface for the master device 21 is such as the first connection means 201. The electric contacts disposed in the expansion interface are used to transmit at least the data and electric power signals. The related structural constraints are not detailed here.

Specifically, the system may have one or more expandable modular network apparatuses. For example, there is a first slave device 22 which is connected to a second slave device 23 by second connection means 202. The master device 21 or the slave devices 22, 23 may be disposed with at least two expansion interfaces, or other means for connecting.

According one embodiment, the master device 21 may be a full-functional network apparatus which at least provides the elementary network services for the user, and to be expanded to other functions through the slave devices 22, 23. The expanded functions are accessible over the elementary network service provided by the master device 21. For example, the master device 21 may be a network router rendering network service. The user device may connect to the master device 21 over a wireless network. The user device is able to link to other network over this wireless network. Then the user device may access the digital television system made by the first slave device 22 over the wireless network. The digital television system exemplarily includes signal processing circuit, decode/encode circuit, antenna and input/output circuit. The master device 21 is able to supply power to the slave devices 22, 23. The slave devices 22, 23 may reduce the circuit related to electric power supply.

When the first slave device 22 renders digital television function, the user device is allowed to retrieve digital television signals by this system. When the second slave device 23 renders NAS function since it has the related signal processing circuit, decode/encode circuit, and input/output interface, the user device is allowed to access the NAS by this system, including reading data from the NAS, and write data to the NAS.

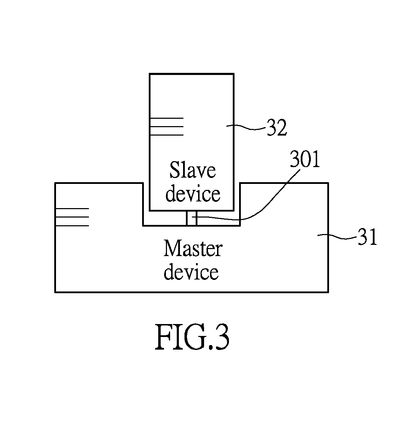

Fig. 3 shows a schematic diagram describing the system in accordance with the present invention.

An exemplary master device 31 is configured to be a base-type device. The master device 31 renders some elementary network services. For example, the master device 31 may provide wired or wireless network service as it operates as a network router. A slave device may be connected to the base-type master device 31 by means for connecting 301. The slave device 32 preferably provides the function module which the master device 31 lacks of. The means for connecting 301 allows the slave device 32 to connect with the master device 31 by means for connecting 301. By the connection 301, the master device 31 supplies power to the slave device 32. The user device merely retrieves signals from the master device 31 even though the signals are made in the slave device 32.

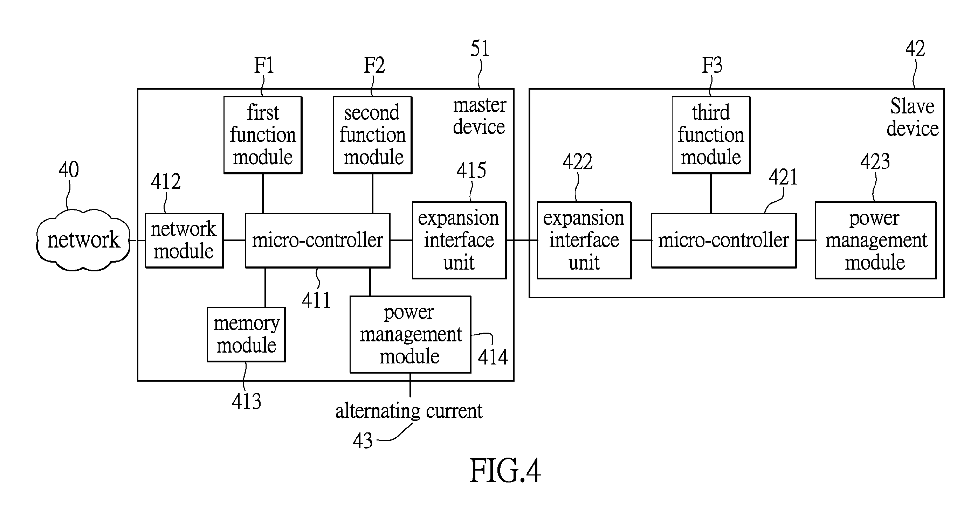

Fig. 4 shows a schematic diagram describing the circuit modules disposed in the modular network apparatus of the system in accordance with the present invention.

The system includes a master device 41 and at least one slave device 42 by means of connection. The means of connection is not only a physical port having the contacts for delivering electric power and transmitting signals, but also the structural mechanism to firmly combine the two devices.

The master device 41 is such as a modular network apparatus. The main circuit modules of the master device 41 include a micro-controller 411 and other modules electrically connected with this micro-controller 411. The micro-controller 411 is used to process the signals among the internal circuit components. A network module 412 disposed in the master device 41 provides a wired interface such as RJ-45 port, or a wireless network interface. The network module 412 is able to route the signals to an external network 40. The network module 412, such as an Ethernet network module, an optical communication module, or a wireless communication module, renders a service to a wide area network.

The master device 41 is configured to have an expansion interface unit 415, which is corresponding to an expansion interface unit 422 of the slave device 42. The master device 41 connects to the slave device 42 via an expansion interface. The master device 41 exemplarily includes a volatile or non-volatile memory module 413 which is as a buffer memory for the system to buffer signals. The memory module 413 may also be a storage for storing the operating programs, applications and instructions that may implement at least one function made by the master device 41 or the slave device 42. The program includes instruction for detecting if any modular network apparatus having one more function module is connected.

Both the expansion interface unit 415 for the master device 41 and the expansion interface unit 422 for the slave device 42 include multiple electrical contacts. The contacts for bother interface units are electrically interconnected when the devices 41 and 42 are combined. The instructions, signals, and electric power signals are transmitted there-between through these contacts. The master device 41 may acknowledge any connection to the slave device 42 by electrical signals made by these contacts. The slave device 42 provides at least one required function for this system including the master device 41. At the moment, hardware or software-based function of the master device 41 allows the system to detect the connection between the master and slave devices (41, 42). By the electrical signals, the system is able to perform signaling, device recognition, compatibility judgment, and/or function activation. It is noted that the system allows the master device 41 to retrieve the instruction for managing the slave device 42 when the slave device 42 is connected with the master device 41. The related software and instructions may be stored in the memory module 413 in advance from a specific location.

The master device 41 renders at least one function module. The function module may be hardware or software-implemented module that couples to the micro-controller 411. The function module in the modular network apparatus such as the master device 41 is used to perform a specific function. In an exemplary example, the master device 41 is disposed with a first function module F1 and a second function module F2. The preloaded function modules (F1, F2) may be the modules performing mobile communication protocol, short-directional network protocol, storage service, audio-video signals, wireless television service, or cable television service.

The master device 41 may also include a power management module 414. The power management module 414, electrically connects to the micro-controller 411, is such as a control circuit for power management for the master device 41. The power management module 414 may include a battery set in the master device 41, or a circuit bridging a power source. The power source is such as the alternating current 43. The power management module 414 in the master device 41 is configured to supply power to the slave device 42 via means of connection between the master device 41 and the slave device 42.

The system includes one or more slave devices (42). The slave device 42 is exemplarily a network device rendering one more function module. The slave device 42 may be a standalone device, or a simplified device than the master device 41. The simplified slave device 42 may not itself connect to the power source but to the master device 41. The simplified slave device 42 may adopt a microcontroller with limited capability of computation. The simplified device may have no display for function indication or management module, but the network service.

The slave device 42 includes a micro-controller 421 which is used to process signals among the inner circuit components. The slave device 42 includes some circuit modules electrically connected to the micro-controller 421. The expansion interface unit 422 for the slave device 42 provides an expansion interface which is used to connect to the master device 41. The slave device 42 is disposed with at least one software or hardware-implemented function module for rendering at least one function. According to the embodiment described in the figure, the slave device 42 has a third function module F3 which is nowhere in the master device 41. The third function module F3 may be a solution for rendering additional network functions. For example, the third function module F3 may implement network storage, digital video service, digital home, or any communication service from the master device.

The slave device 42 may have a power management module 423. The power management module 423 is in charge of power allocation for the slave device 42, and managing power supply after connected to the master device 41.

It is worth noting that the master device 41 includes a memory module 413 for preinstall program or instructions for performing the function made by the slave device 42, or store the program expanded by the connected slave device 42. The memory module 413 may also include instruction for detecting any connected slave device 42 via the expansion interface. The means of connection between the master device 41 and the slave device 42 may be a connection device, or an expansion interface. The system provides the functions rendered by the combined modular network apparatuses.

The expansion interface is such a connection port between the master device 41 and the slave device 42 may be used to transmit electric power, signals, operating status and/or clock cycle. In practice, the expansion interface may adopt the present transmission protocol such as USB, RS232, Ethernet network port, electric power port, or any universal interface such as global programming interface (GPI). The expansion interface may also be a proprietary user-defined interface.

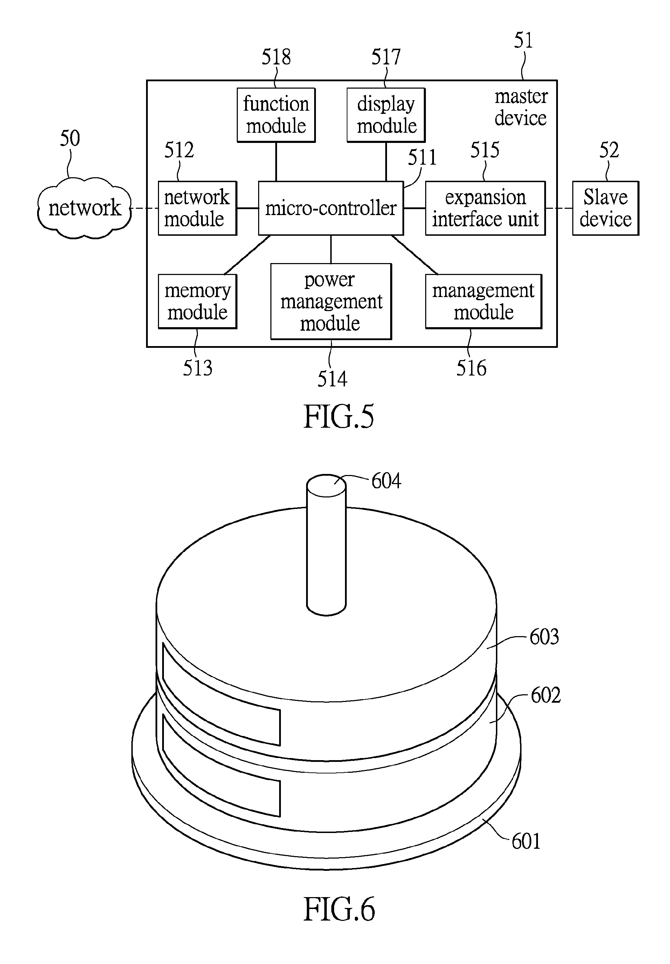

Next, in Fig. 5, the circuit modules of master device are described.

The master device 51 is a standalone network device rendering a specific function module 518. The function module 518 performs an elementary network function. The main circuit modules include a micro-controller 511 for processing signal, and a network module 512 electrically connected to the micro-controller 511. The network module 512 allows the master device 51 to connect to the network 50. The memory module 513 includes volatile or non-volatile memory for buffering signals. The memory module 513 may be used to store the program or instructions for operating the device. The power management module 514 is used to manage power allocation between the master device 51 and the connected slave device 52. The master device 51 and the connected at least one slave device 52 share the power source the master device 51 is connected. The expansion interface unit 515 for the master device 51 is corresponding to the expansion interface for the slave device 52.

According to the embodiment shown in the diagram, the user may directly manipulate the master device 51 since the master device 51 is disposed with the software-implemented management module 516. The management module 516 provides a remote management scheme for the user to configure the modular network apparatus, namely the master device 51. The management module 516 is provided for the user to manage the further function module made by the slave device 52 when the slave device 52 is connected to the master device 51. The management module 516 may initiate a web management interface, and provide various configuration and management items, including intrinsic functions. The user is allowed to configure the functions via the management module 516. The system may still allow the user to perform management by a program installed in the user device.

The master device 51 may be disposed with a display module 517. The display module 517 may show the operating status of the master device 51 or/and the slave device 52 by light indication, or a display. In addition to showing the operating status of the master device 51, the display module 517 displays the status of the slave device 52. The operating status is such as the status of electric power, network connection, and/or functions in operation.

It is worth noting that the various connections may be provided in the assembly of the master device and the slave device. For example, the master and slave devices can be structurally plugged to each other. An additional connection device may be provided for plugging the master and slave devices, and render electric connection there-between. Further, the master device itself may be the connection device for directly plugging the slave device. Some examples are described as follows.

Fig. 6 schematically shows the system having the multiple modular network apparatuses in one embodiment of the present invention.

In an exemplary embodiment, a structure such as the connection device base 601 is provided. The connection device base 601 is electrically connected to the devices which are socketed into the base 601 via a connection member 604. The devices include a master device 602 rendering an elementary network service. The master device 602 is electrically connected with the connection device base 601. Through the same connection means, the slave device 603 is electrically connected to the base 601. The master device 602 is then connected to the slave device 603 via the connection member 604. The signals, electric power, and message such as the operating status and clock cycle are transmitted via this rod-like connection member 604.

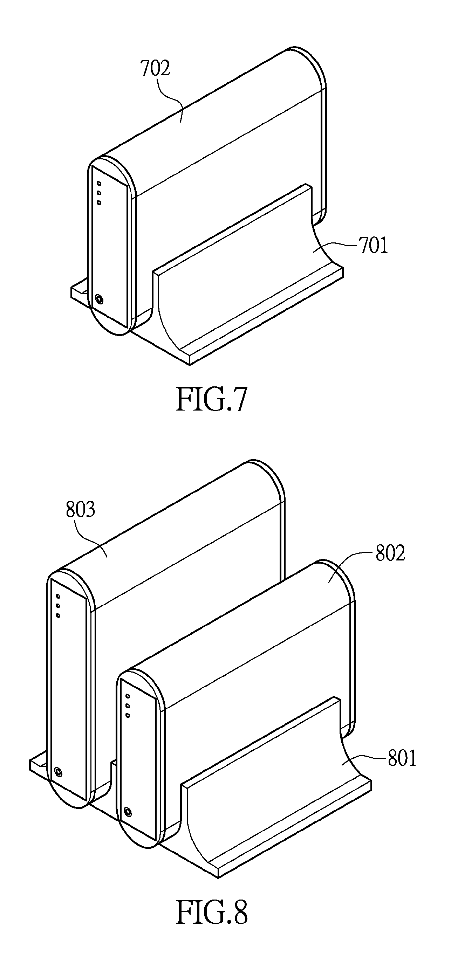

Fig. 7 shows one further embodiment to implement the connection between the master device and the slave device.

The master device 701 is exemplarily as a connection device base. The slave device 702 can be plugged to the master device 701. The connection between the devices 701, 702 is electrically connected by a structural means. It is noted that a solid structure and stable signaling made by this connection should be considered.

Fig. 8 shows one further embodiment of the system. A connection device 801 is provided. The connection device 801 forms two or more expanding sockets. A master device 802 may be plugged into the connection device 801. One or more slave device 803 may also be plugged into the connection device 801. By this connection device 801, the signals and electric power signals can be transmitted between the devices 802 and 803. The connection device 801 can firmly carry the master device 802 and/or one another slave device 803. The master device 802 may be a standalone network device for rendering network connection service. The slave device 803 provides expanding function when it is plugged into the connection device 801. The function made by the slave device 803 may be performed through the master device 802 and allowed to be used by the user device.

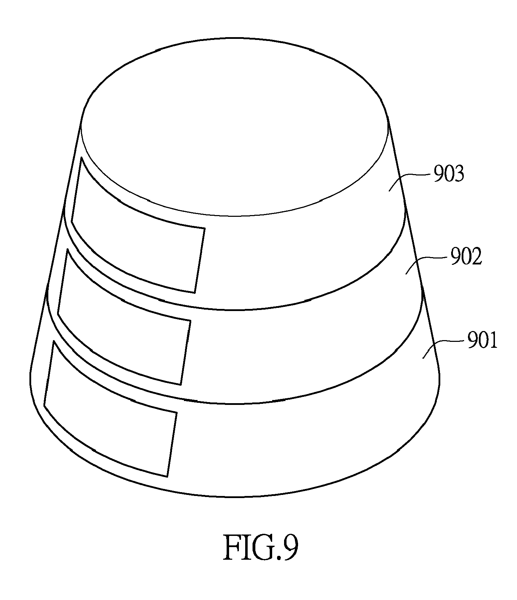

One further embodiment to link the slave device and the slave device is exemplarily shown in Fig. 9.

A master device 901 is a primary device of the system. An expansion interface is disposed in the master device 901. The other expanding modular apparatuses such as slave devices 902 and 903 may be connected to the master device 901 by one-by-one stacking up the devices. An expansion interface (not shown) is provided to electrically combine the devices 901, 902 and 903. The expansion interface is also used to transmit signals and electric power signals. The master device 901 is disposed with a management module, and a power management module bridging an external power source. The device (901, 902 or 903) may also be disposed with a manipulation interface. Through this manipulation interface, the user may simultaneously manage the master device 901 and slave devices 902, 903.

Thus, the disclosure related to the system having modular network apparatuses is directed to provide a master modular network apparatus for rendering primary function, but provide slave modular network apparatus to provide expanding function. The modular network apparatuses are combined via an expansion interface, by which the signals and electric power signals can be delivered. This master-slave architecture provides a scheme to expand the various functions for the system, rather than the conventional system lack of ability of expanding other functions. Therefore, the system of the present invention provides a solution for the manufacturer to focus development of new functions and services of the slave devices for the system under the original architecture.

It is intended that the specification and depicted embodiment be considered exemplary only, with a true scope of the invention being determined by the broad meaning of the following claims.

## Claims

1. A modular network apparatus, comprising:
a micro-controller (411), being a circuit used to process signals among internal modules of the modular network apparatus;
a network module (412), electrically connected with the micro-controller (411), used to connect to a network;
at least one function module (F1), coupled to the micro-controller (411), used to perform at least one function rendered in the modular network apparatus;
an expansion interface unit (415), electrically connected with the micro-controller (411), rendering an expansion interface for connected with another network apparatus which with one further function module; and
a memory module (413), electrically connected with the micro-controller (411), used to store instruction for performing the at least one function, and instruction for detecting the one further function module of another network apparatus via the expansion interface.

2. The apparatus according to claim 1, further comprising a power management module (414), electrically connected with the micro-controller (411), used to bridge a power source.

3. The apparatus according to claim 1, further comprising a management module (516), electrically connected with the micro-controller (411), having a function module used to remotely manage the modular network apparatus.

4. The apparatus according to claim 3, wherein the management module (516) further connects to the network apparatus with one more function module rendering remote management to the modular network apparatus.

5. The apparatus according to claim 1, further comprises a display module (517) which is used to display operating status of the modular network apparatus, including the status of a network connection to the network apparatus with the one more function module via the expansion interface.

6. The apparatus according to claim 1, wherein the expansion interface interconnecting the modular network apparatus and the network apparatus with the one more function module is a port used to transmit power, signals, operating status or clock cycle.

7. A system having multiple modular network apparatuses, comprising:
a master device (41), being a modular network apparatus, comprising:
a micro-controller (411) in the master device (41), being a circuit to process signals among the circuits within the master device (41);
a network module (412) in the master device (41), electrically connected with the micro-controller (411) of the master device (41), used to connect to a network;
at least one function module (F1), coupled to the micro-controller (411) of the master device (41), used to perform at least one function in the master device (41);
an expansion interface unit (415), electrically connected with the micro-controller (411) of the master device (41), providing an expansion interface for the master device (41) to connect with another network apparatus with one more function module;
a memory module (413), electrically connected with the micro-controller (411) of the master device (41), used to store instruction for performing the at least one function, and instruction for detecting the connected network apparatus with the one more function module via the expansion interface;
at least one slave device (42), being the network apparatus with the one more function module, comprising:
a micro-controller in the slave device (42), being a circuit for processing signal among circuits within the slave device (42);
at least one function module in the slave device (42), coupled with the micro-controller (421) of the slave device (42), used to performing the at least one function within the slave device (42);
an expansion interface unit (422) in the slave device (42), electrically connected with the micro-controller (421) of the slave device (42), rendering an expansion interface for the slave device (42) to connect to the master device (41); and
means for connecting the master device (41) with the at least one slave device (42), allowing the combined multiple modular network apparatuses to perform functions provided by the master device (41) and the at least one slave device (42).

8. The system according to claim 7, wherein the master device (41) further comprises a power management module (414), electrically connected with the micro-controller (411) of the master device (41), bridging a power source.

9. The system according to claim 8, wherein the master device (41) and the at least one slave device (42) share the power source connected by the master device (41).

10. The system according to claim 7, wherein the master device further comprises a management module (516), electrically connected with the micro-controller (411) of the master device (41), used to remotely manage the function modules within the master device (41) and the slave device (42).

11. The system according to claim 7, further comprising a display module (517) used to display operating status of the master device (41) and/or the slave device (42).

12. The system according to claim 11, wherein the means for connecting is a connection device (801) which is used to electrically interconnect the master device (41) and the slave device (42); and the connection device (801) is used to transmit electric power, signals, operating status and/or clock cycle.

13. The system according to claim 12, wherein the master device (41) and the slave device (42) are plugged in the connection device (801).

14. The system according to claim 12, wherein the master device (41) and the slave device (42) are socketed in the connection device (801).

15. The system according to claim 7, wherein the means for connecting is a connection device (801) which is used to electrically interconnect the master device (41) and the slave device (42); and the connection device (801) is used to transmit electric power, signals, operating status and/or clock cycle.

16. The system according to claim 7, wherein the expansion interface of the master device (41) and the expansion interface of the slave device (42) are directly interconnected for transmitting electric power, signals, operating status and/or clock cycle.
